# EUROPÄISCHE PATENTSCHRIFT

(11) **EP 1 729 917 B1**
(45) Veröffentlichungstag und Bekanntmachung des Hinweises auf die Patenterteilung: **21.01.2009**
(21) Anmeldenummer: 05733602.6
(22) Anmeldetag: 29.03.2005
(51) Int. Cl.: B23Q 7/14, B23Q 41/02, B23Q 39/04

(54) **WERKSTÜCKBEARBEITUNGSVERFAHREN UND -VORRICHTUNG FÜR EIN TRANSFERSYSTEM MIT MEHRSEITIGER BEARBEITUNG**
WORKPIECE MACHINING METHOD AND WORKPIECE MACHINING DEVICE FOR A TRANSFER SYSTEM WITH MACHINING CARRIED OUT ON A NUMBER OF SIDES
PROCEDE ET DISPOSITIF D'USINAGE DE PIECES POUR UN SYSTEME DE TRANSFERT PERMETTANT UN USINAGE SUR PLUSIEURS FACES

(30) Priorität: 30.03.2004 DE 102004016071
(43) Veröffentlichungstag der Anmeldung: 13.12.2006
(73) Patentinhaber: Continental Teves AG & Co. oHG, 60488 Frankfurt am Main (DE)
(72) Erfinder: MEIER, Peter, 65929 Frankfurt/Main (DE); GOCKEL, Detlef, 65760 Eschborn (DE)
(86) Internationale Anmeldenummer: PCT/EP2005/051415
(87) Internationale Veröffentlichungsnummer: WO 2005/095048

(56) Entgegenhaltungen:
- DE-A1- 19 607 320
- DE-A1- 19 648 810
- DE-A1- 19 756 278
- PATENT ABSTRACTS OF JAPAN Bd. 2000, Nr. 22, 9. März 2001 (2001-03-09) & JP 2001 129742 A (KITAMURA MASAHIRO; TODA SEIKI:KK), 15. Mai 2001 (2001-05-15)

## Beschreibung

Die Erfindung betrifft ein Werkstückbearbeitungsverfahren für ein Transfersystem.

Transfersysteme, auch Transferstrassen genannt, sind bekannt. Aus dem Invest Report 1/1999, S. 11 der Fa. Bosch ist beispielsweise das Transfersystem MTS 2 bekannt. Das Transfersystem MTS 2 ist modular aufgebaut und umfasst voll funktionsfähige Einheiten mit Automatikstationen und manuellen Arbeitsplätzen. Es sind voll funktionsfähige Module betreffend Mechanik, Steuerung sowie elektrische und pneumatische Installation innerhalb kompletter Funktionsgruppen gebildet, welche zur Installation mittels dreier Steckverbinder miteinander verbunden werden. Der Transport von Werkstückträgern erfolgt über Transportriemen, und jedes Modul des Transfersystems verfügt über einen eigenen Motor zum Antrieb des Transportriemens.

Das bekannte Transfersystem MTS 2 arbeitet nach folgendem Verfahren. Eine manuelle Station dient einer Eingangskontrolle und zum Einschleusen von Werkstücken in ein Hauptumlaufsystem des Transfersystems. Ein Werkstückträger ist mit Codierungen versehen, die dazu dienen, dass die gespeicherten Informationen innerhalb des Transfersystems ausgelesen und die erforderlichen Prozessschritte absolviert werden können. Danach werden die Werkstücke Automatikstationen zugeführt. Nach einer Endmontage verfährt jeder Werkstückträger in die ursprüngliche Ausgangsstation, wo eine weitere Qualitätskontrolle stattfindet. Fehlerfreie Werkstücke werden vom Förderband genommen. Fehlerhafte Werkstücke absolvieren einen weiteren Durchlauf, steuern jedoch nur noch die zur Nachbesserung erforderliche Station an.

Aus der DE 196 48 810 A1 geht eine Lade- und Wendeeinrichtung für eine Drehmaschine hervor. Zum Be- und Entladen außerhalb eines Arbeitsraumes und zum Bereitstellen von zu bearbeitenden Werkstücken ist ein linearbeweglicher Werkstückträger in Richtung des Arbeitsraumes vorgesehen, der in drei Stellungen positionierbar ist.

Es ist eine Aufgabe der vorliegenden Erfindung, ein Werkstückbearbeitungsverfahren bereit zu stellen, welches in Verbindung mit einem Transfersystem eine verbesserte Effizienz und Flexibilität ermöglicht. Obwohl bekannte Betriebsverfahren eine selektive Nacharbeit von fehlerhaften Werkstücken erlauben, ist die generelle Produktionskapazität verbesserungsfähig.

Die Aufgabe wird mit einem Verfahren gemäß den Merkmalen des Patentanspruchs 1 bei einem Transfersystem gelöst.

Erfindungsgemäß ist vorgesehen, das ein- und dasselbe Werkstück für eine mehrseitige Bearbeitung mehrfach durch dieselbe Transferstrasse geschleust wird. Die Positionier- und Transferaufgabe übernimmt ein zweiachsiges x-y-Systeme mit Servomotorantrieben.

Des weiteren wird ein Transfersystem mit einem Werkstückträger gemäß Anspruch 8 vorgeschlagen. Demnach ist eine Station mit einer automatisierten Handhabungsvorrichtung, insbesondere mit einem Roboter und einem Rücklauf vorgesehen, um werkstücke nach einem ersten Durchlauf und zur Vorbereitung von einem oder mehreren weiteren Durchläufen von einem Werkstückträger aufzunehmen, zu drehen, und in definierter, verdrehter Lage auf dem Werkstückträger abzulegen.

Weitere Einzelheiten der Erfindung gehen aus Unteransprüchen im Zusammenhang mit der Beschreibung und der Zeichnung hervor. In der Zeichnung zeigt:
Fig. 1a - 1f: Prinzipskizzen mehrerer Prozessschritte bei einem Erstdurchlauf eines Werkstückes WS 1 zur Bearbeitung einer ersten Werkstückseite E,
Fig. 2a - 2f: Ein gewendetes Werkstück WS 1 zusammen mit einem Werkstück WS 2 beim gemeinsamen Durchlauf zur Bearbeitung der Werkstückseiten E und F,
Fig. 3a - 3e: Ein gewendetes Werkstück WS 2 zusammen mit einem Werkstück WS 3 beim gemeinsamen Durchlauf zur Bearbeitung der Werkstückseiten E und F,
Fig. 4 und 5: Perspektivische Ansichten von Werkstückträgern mit Werkstücken, und
Fig. 6: eine Transferstrasse.

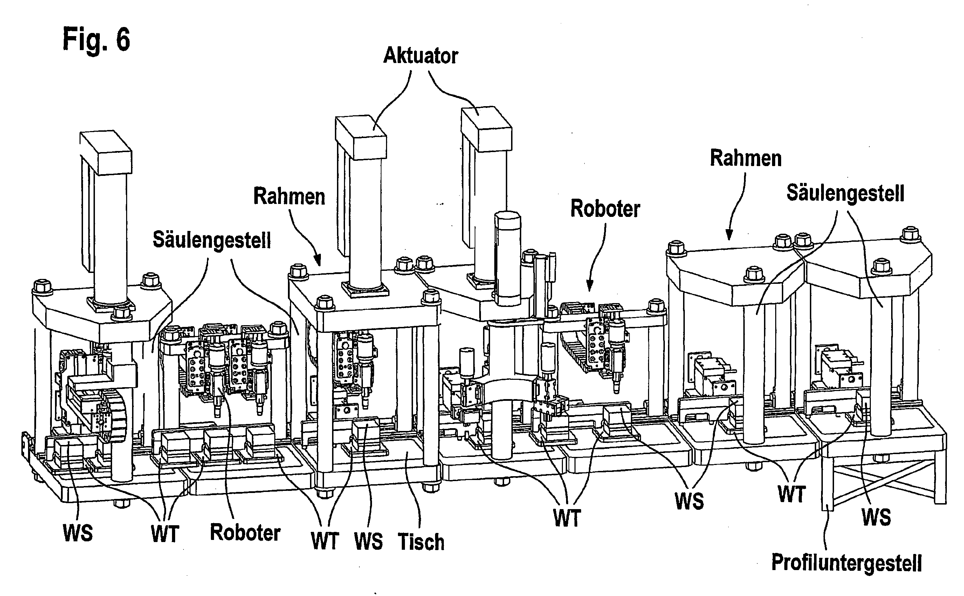

Fig. 6 verdeutlicht eine modular aufgebaute, automatische Fertigungs- und Montageanlage auf Basis eines Transfersystems mit in Hauptabmaßen identischen Fertigungsmodulen mit entsprechenden Stationen 1,2,3,4,5 die insbesondere für spanlose aber prinzipiell auch für spanende Bearbeitungsverfahren anwendbar sind. Es können wenigstens zwei und maximal beliebig viele Fertigungsmodule vorgesehen sein. Jedes Fertigungsmodul umfasst eine oder mehrere, vorzugsweise ortsfest angeordnete Werkzeugaufnahmen mit einem Servomotorantrieb für eine Werkzeugbewegung, und mit einen Tisch zur Aufnahme von Bearbeitungskräften. Ortsfest bezieht sich in x-y-Koordinatenrichtung und versteht sich in diesem Zusammenhang so, dass die Werkzeugaufnahme zwar - beispielsweise für einen Werkzeugwechsel - einen Ortswechsel durchführen kann. Im Rahmen der Bearbeitung werden jedoch Verfahrbewegungen in x- und y-Richtung ausschließlich von dem Werkstück ausgeführt. Das Werkzeug ist beispielsweise als Presse ausgebildet und für die Werkstückbearbeitung lediglich in z-Koordinatenrichtung aktiv bewegbar. Für die Schlittenpositionierung dient ein 2-achsiges CNC-System mit Servomotorantrieben und Führungen zum definierten Verfahren des Schlittens in Richtung der verdeutlichten x- und y- Hauptachsen innerhalb eines Bearbeitungsraumes.

Es versteht sich, dass jedes Fertigungsmodul mit Schaltern und/oder Sensoren zur Erfassung von Maschinen-, Werkzeug- und Werkstückinformationen versehen ist, welche mit wenigstens einer lokalen elektronischen Steuer- und Regeleinheit für die Antriebe verbunden sind. Die lokale Steuer- und Regeleinheit mit integriertem Maschinenschutz ermöglicht eine autarke Funktion jedes Fertigungsmoduls. Des weiteren sind Mittel zur Energieversorgung und Informationsversorgung sowie zur Kommunikation zwischen den einzelnen Fertigungsmodulen wie auch zur Vernetzung mit einem übergeordneten elektronischen Leitstand vorgesehen. Die Servomotor-Antriebe für den Schlitten führen sowohl Positionierbewegungen für die Werkstückträger wie auch Vorschubbewegungen zur Bearbeitung von Werkstücken WS1, WS2, WS3 aus. Des weitern dienen die Antriebe für den Schlitten jeweils auch für den Transfer des Werkstückträgers WT von Fertigungsmodul zu Fertigungsmodul. Der Schlitten mit seinen Haltemitteln (Indexgreifer) indexiert den (einen oder mehrere) Werkstückträger WT, zieht diesen in ein Fertigungsmodul ein, verschiebt diesen innerhalb des Fertigungsmoduls in die jeweils erforderliche Bearbeitungsposition (1 bis n Positionen innerhalb des Bearbeitungsraumes einer Fertigungsmodul sind denkbar) und übergibt den Werkstückträger WT samt Werkstück WS von einem gegenwärtigen Fertigungsmodule zur weiteren Be- und Verarbeitung an ein nachfolgendes Fertigungsmodul.

Press-, Füge- und Bearbeitungsprozesse können in z-Hauptachsenrichtung (Vertikalrichtung) von oben nach unten vorgenommen werden. Zu diesem Zweck weist jedes Fertigungsmodul hydraulisch, pneumatisch oder elektrisch/elektromagnetisch angetriebene Kolben-Zylindereinheiten auf. Bei der Bearbeitung sind die Werkstücke WS definiert auf dem Werkstückträger WT eingespannt, welcher definiert innerhalb des Bearbeitungsraumes platziert ist. Der Werkstückträger WT liegt auf dem Tisch auf, so dass der Tisch Bearbeitungskräfte aufnimmt.

Ein Modul besteht im Grundaufbau aus dem Tisch (Platte mit Profiluntergestell), auf dem Gleitelemente des Werkstückträgers WT gleiten können, und wobei die Bearbeitungskräfte direkt in den Tisch eingeleitet werden. Auf dem Tisch befindet sich die Station 1,2,3,4,5, als Fertigungsmodul mit einem Säulengestell mit einem vorzugsweise vertikal in Z-Richtung arbeitenden Aktuator für Bearbeitungswerkzeuge (z.B. Elektro-Servopresse, Hydraulikpresse, pneumo-hydraulische Presse und/oder Fügemodul mit Werkzeugen). Andere, alternative Bestückungen wie beispielsweise Umsetzer oder ähnliches mehr sind denkbar. Ein Rahmen ist oberhalb des Tisches angeordnet und ermöglicht eine Verkleidung des Moduls mit Türen, Wänden und ähnlichem, so dass in dem Bearbeitungsraum eine saubere, lärmgedämmte und sichere Atmosphäre zur Durchschleusung der Werkstücke herrscht.

Die Module sind einheitlich und hinsichtlich ihrer Hauptabmaße standardisiert ausgeführt. Zur einfachen Variation der Anlage sind Höhe und Tiefe der Module identisch, während ihre Breite generell unterschiedlich sein kann. Beispielsweise können schmale Module vorgesehen sein, welche weniger komplexe Arbeiten ausführen, wie beispielsweise eine seitliche Umsetzbewegung. Daher kann die Breite (510 mm) derartiger Module prinzipiell kleiner, vorzugsweise etwa halb so groß bemessen sein, wie die Breite (1020mm) eines Standardmoduls.

Ein Fertigungsmodul verfügt über eine Vielzahl von Gebern, Sensoren und Schaltern zum Abfragen von Positionen, Belegungen etc., die der Steuerung, dem Maschinenschutz wie auch dem Bedienerschutz dienen können. Die Sicherheitseinrichtungen sind autark für jedes Modul vorhanden, kommunizieren jedoch modulübergreifend. Das heißt, dass jedes Fertigungsmodul stets zumindest über den Status von benachbarten Fertigungsmodulen informiert ist. Gegebenenfalls kommt in jedem Fertigungsmodul noch ein Bilderfassungsmittel hinzu. Die genannten elektrischen und elektronischen Sensoren und Bauteile sind mit der lokalen elektronischen Steuereinheit verbunden, die in das Fertigungsmodul integriert ist. Durch diese Bauweise ist jedes Bearbeitungsmodul völlig autark und austauschbar, was sich insbesondere auch auf das Werkstückträgerhandling bezieht. Für den Werkstücktransfer ist kein verschleißanfälliges Gurtband erforderlich.

Durch den prinzipiell gleichen und ggf. sogar identischen Aufbau der Fertigungsmodule ist es sogar denkbar, diese flexibel an beliebiger Stelle innerhalb des Transfersystems anzuordnen. Die erstmalige Programmierung von Arbeitsschritten kann von einer übergeordneten Leitstelle geladen werden.

Generell ist das Transfersystem für alle serientechnisch relevanten spanenden und spanlosen Bearbeitungsvorgänge geeignet. Beispielhaft sei genannt: Verstemmen, Stanzen, Umformen, Nieten, Kleben, Schweißen, Ablegen, Zerspanen, Messen, Prüfen und vieles mehr. Das Transfersystem eignet sich jedoch ganz besonders für sogenannte Verkugelungen, bei denen eine harte und übermassige Wälzlagerkugel aus Wälzlagerstahl in eine untermäßige Bohrung eines Aufnahmekörpers aus verhältnismäßig weichem Werkstoff eingepresst wird, um auf diesem Wege einen kostengünstigen, druckmitteldichten Bohrungsverschluss zu erhalten. Eine andere potentielle Anwendung betrifft sogenannte Clinchverbindungen für elektromagnetisch betätigbare Ventile oder Pumpenlaufbuchsen, Deckel oder ähnlichem mehr.

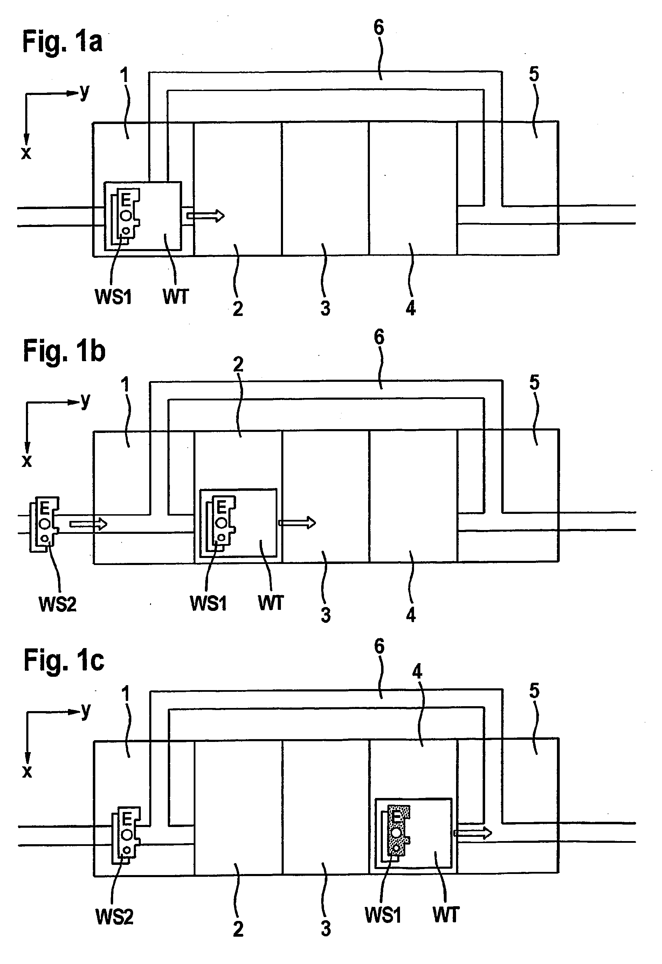

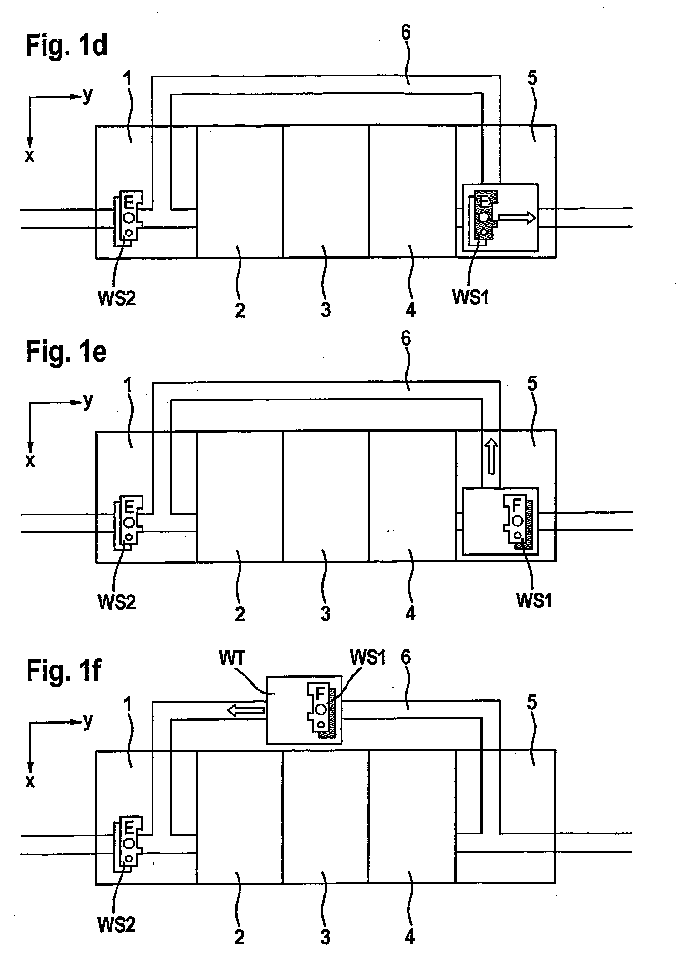

Ein mehrstufiger Bearbeitungsprozess geht aus den Fig. 1a bis 1f hervor. Gemäß Fig. 1a befindet sich ist ein Werkstück WS 1 mit einer zu bearbeitenden Seite E nach oben in einer Aufnahme A eines Werkstückträgers WT, welcher sich innerhalb einer ersten Station 1 befindet. Nach den Zeichnungen 1b und 1c wird das Werkstück WS1 entsprechend dem gewünschten Grad in den Stationen 2 und ggf. 3 zukzessive bearbeitet und komplettiert. Die grau schattierte Oberflächendarstellung des Werkstücks WS1 in Fig. 1c verdeutlicht den abgeschlossenen Fertigungs- oder Montageprozess auf dieser Werkstückseite. Gemäß den Fig. 1d und 1e wird der Werkstückträger WT zusammen mit dem teilweise fertig bearbeiteten Werkstück WS1 zu der Ausschleusestation 5 transferiert. Hier wird das Werkstück WS1 automatisiert mittels einer Handhabungsvorrichtung wie insbesondere einem Roboter gewendet, so dass eine unbearbeitete Seite (Unterseite F) nach oben weist. Nach dem Wenden wird das Werkstück WS1 wieder auf dem Werkstückträger WT abgelegt. Dazu dient die Aufnahme B, so dass die gegenüber liegende Aufnahme A zunächst leer bleibt. Folglich können die beiden Aufnahmen A, B wechselweise unterschiedliche Werkstücke an unterschiedlichen Seiten einspannen. Der erforderliche Anpassungsvorgang von Spannvorrichtungen geschieht selbsttätig.

Gemäß Fig. 1e und 1f erfolgt ein Rückförderprozess über den Rücklauf 6. Der Rückförderprozess ist beendet, wenn das Werkstück WS1 zusammen mit dem Werkstückträger WT wieder die Einschleusestation 1 erreicht.

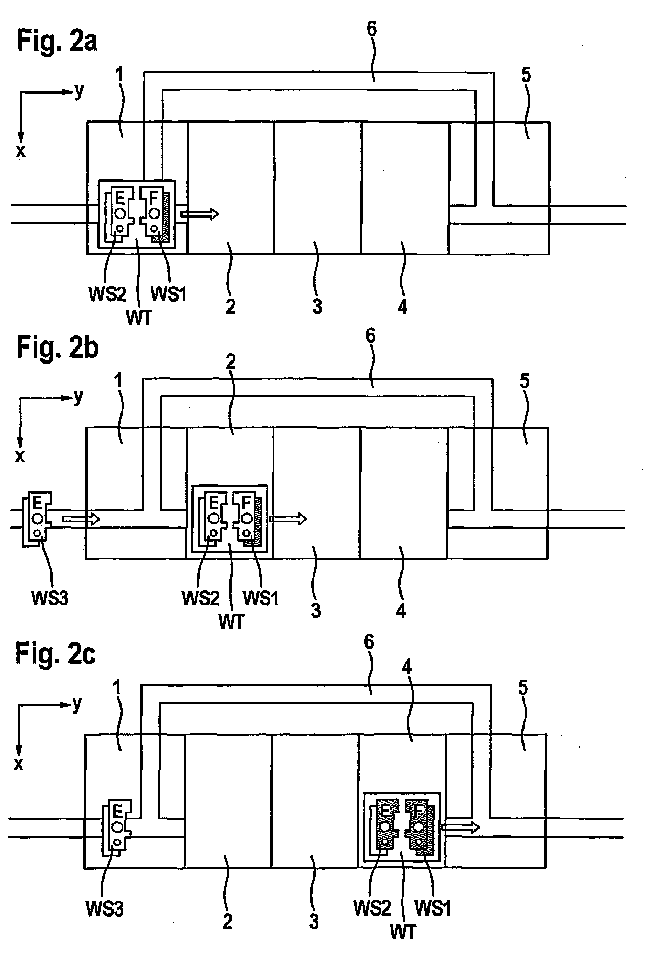

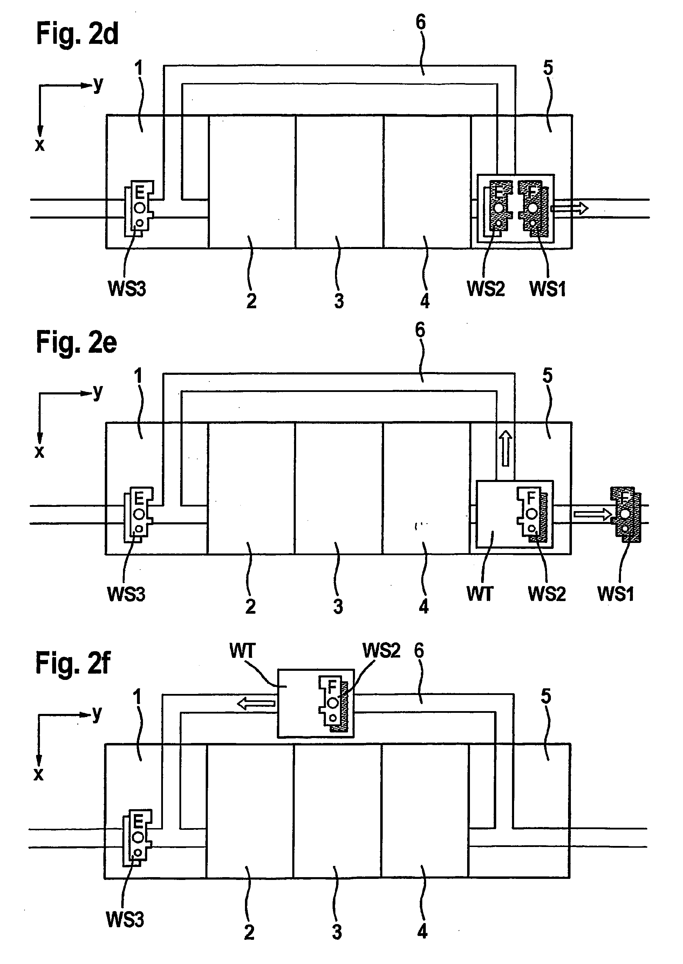

Wie zu ersehen ist, wurde bereits ein unbearbeitetes Werkstück WS2 mit einer unbearbeiteten Oberseite E in der Station 1 bereit gestellt. Nach Fig. 2a wird das Werkstück WS 2 auf dem Werkstückträger WT abgelegt und mittels Aufnahme A eingespannt, die für die Oberseitenbearbeitung vorgesehen ist. Es schließen sich die Bearbeitungsschritte für die beiden Beareitungsseiten E und F nach Fig. 2b an. Gemäß Fig. 2c liegt ein vollständig fertig bearbeitetes Werkstück WS 1 und ein einseitig fertig bearbeitetes Werkstück WS 2 vor. Nach den Figuren 2d und 2e kann nunmehr das Werkstück WS 1 ausgeschleust werden, während das Werkstück WS2 nach Fig. 1e gewendet und in die Aufnahme B umgebettet wird, bis es seinen Rücktransfer zu der Einschleusestation nach Fig. 1f 1 antreten kann.

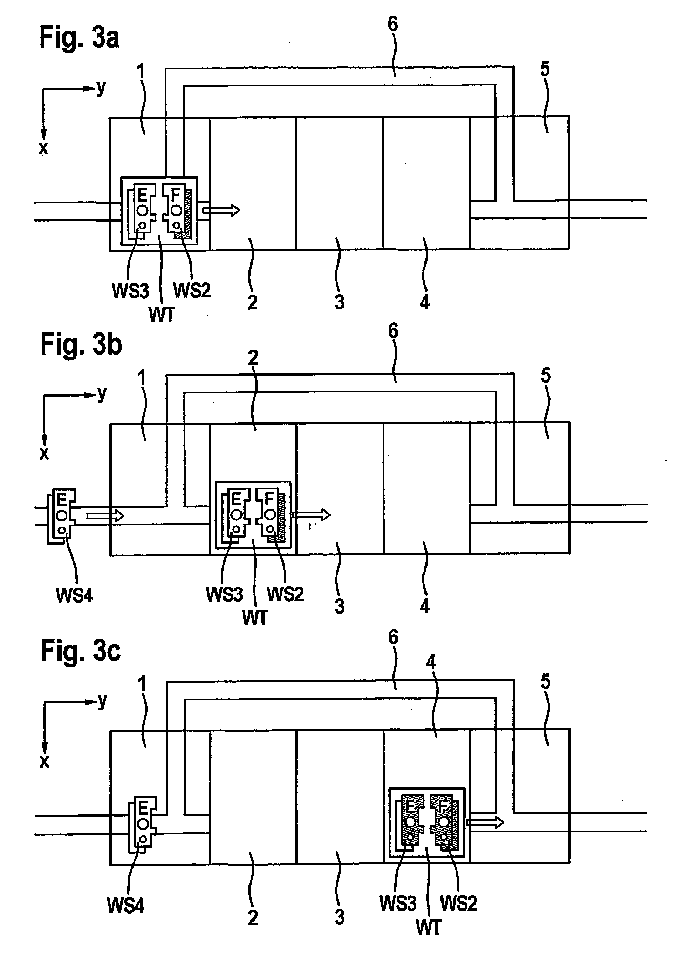

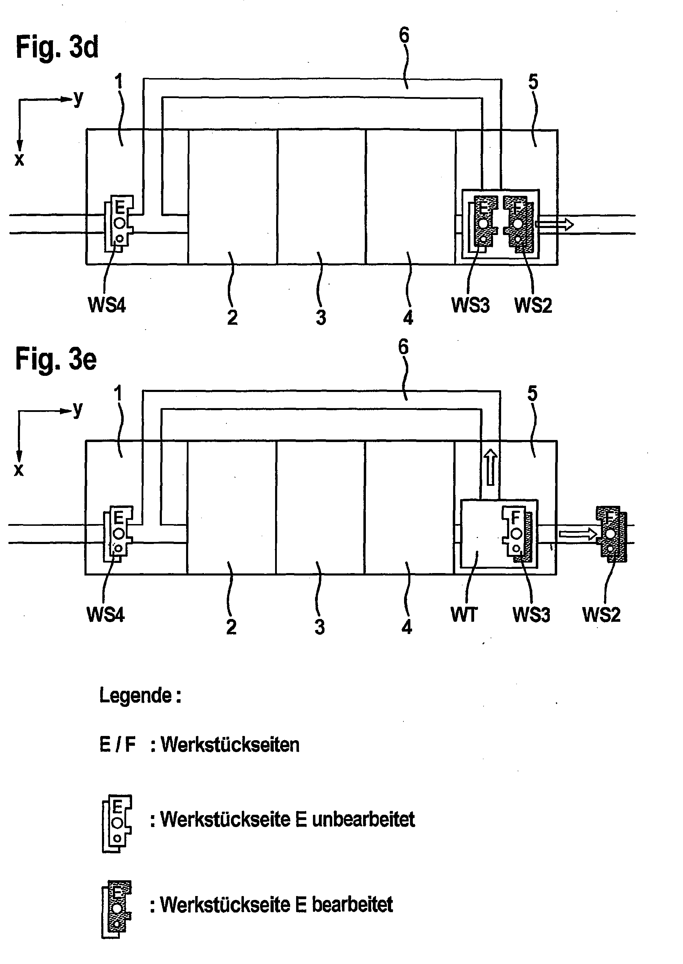

Nach den Figuren 3a bis 3e wiederholt sich der Prozess wie vorstehend anhand der Fig. 2a bis 2f beschrieben in Bezug auf das unbearbeitete, bereitgestellte Werkstück WS3 sowie in Bezug auf das teilweise auf der Seite E bearbeitete Werkstück WS2. Es versteht sich, dass sich prinzipiell beliebig viele Zyklen für beliebig viele Werkstückseiten mit beliebig vielen Werkstücken WSN anschließen können, ohne die Erfindung zu verlassen. Bei würfelförmigen Werkstücken ist es beispielsweise denkbar, mit dem Prozess mehr als lediglich zwei Seiten zu bearbeiten, wenn es die Gestaltung erlaubt. Wesentlich ist lediglich, dass prinzipiell nur zwei mal, also bei Arbeitsaufnahme und bei Arbeitsbeendigung Prozesse mit teilweise gefüllten Werkstückträgern WT auftreten. Im übrigen liegt eine doppelte Belegung jedes Werkstückträgers vor, die dazu ausgenutzt wird, um jede Station 1 bis 5 mit doppelter Funktionalität zu versehen. Daraus resultiert eine vergrößerte Flexibilität.

Alle Bearbeitungsprozess wie auch der Werkstücktransfer erfolgen im Wesentlichen vollautomatisch unter NC und CNC-Control. Ferner erfolgt die Be- und Verarbeitung in Reinraumatmospäre, um Unsauberkeit und demzufolge Defekthäufung auszuschließen. Zu diesem Zweck kann eine Luftfilteranlage für die Fertigungshalle angezeigt sein.

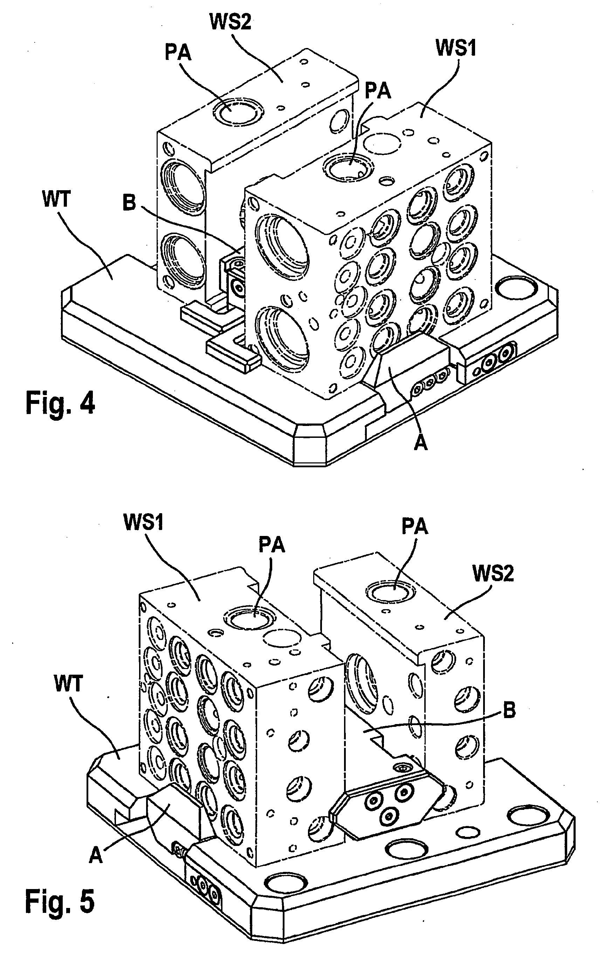

Die Fig. 4 und 5 verdeutlichen im Einzelnen einen Werkstückträger WT, auf dem zwei unterschiedliche Werkstücke WS1 (MK 25E), WS2 (MK 70), bei denen jedoch bestimmte Bohrungen - hier Pumpenaufnahmebohrungen PA - übereinstimmen, in Aufnahmen A,B aufgespannt sind. Die Werkstückspannung erfolgt beispielsweise mittels Federmittel, welche von einem Greifer vor dem Ablegen des Werkstückes WS auseinandergespreizt werden.

Prinzipiell ist es jedoch ebenso denkbar, die Einspannung elektrisch/pneumatisch oder hydraulisch zu erledigen. Es versteht sich, dass die Aufnahmen A, B des Werkstückträgers WT über geeignet angepasste Spannvorrichtungen für die Werkstücke MK 25E, MK 70 verfügt. Weil es sich bei einem Anwendungsbeispiel der Werkstücke um Ventilblöcke handelt, die prinzipiell aus Aluminium- oder Kunststoffwerkstoff bestehen, finden vorrangig mechanische Spannmittel Verwendung. Für diese Anwendungen scheiden jedoch elektromagnetische Spannmittel weitgehend aus. Diese sind anwendbar, wenn es sich um ferromagnetische Werkstoffe handelt, die es zu be- oder verarbeiten gilt.

## Patentansprüche

1. Werkstückbearbeitungsverfahren für ein Transfersystem, wobei ein Werkstück (WS1, WS2, WS3) zusammen mit einem Werkstückträger (WT) in einer ersten Station (1) in das Transfersystem eingeschleust, sodann in folgenden Stationen (2,3,4), die mehrere Fertigungsmodule umfassen können bearbeitet, und wobei das Werkstück (WS1, WS2, WS3) in einer letzten Station (5) ausgeschleust wird, wobei
a) eine erste Seite (E) des Werkstückes (WS1, WS2, WS3) in einem ersten Durchlauf durch das Transfersystem bearbeitet wird, dass
b) das Werkstück (WS1, WS2, WS3) nach seinem ersten Durchlauf durch die Stationen (2,3,4) automatisch gewendet und wieder auf dem Werkstückträger (WT) abgelegt wird, und dass
c) eine andere Seite (F) des Werkstückes (WS1, WS2, WS3) in einem zweiten Durchlauf durch das Transfersystem bearbeitet wird, **dadurch gekennzeichnet, dass**
d) ein einseitig bearbeitetes Werkstück (WS1, WS2) nach einem ersten Durchlauf durch das Transfersystem zu der ersten Station (1) zurückgefördert wird, bevor die zweite Seite (F) bearbeitet wird, und dass für die Rückförderung ein Rücklauf (6) vorgesehen ist.

2. Werkstückbearbeitungsverfahren nach Anspruch 1, **dadurch gekennzeichnet, dass** ein Werkstück (WS1,WS2,WS3) n Durchläufe durch das Transfersystem absolviert, wobei n die Anzahl der Seiten des Werkstückes (WS1, WS2, WS3) repräsentiert, und dass das Werkstück (WS1, WS2, WS3) zu diesem Zweck n-1 mal gewendet wird.

3. Werkstückbearbeitungsverfahren nach Anspruch 1, **dadurch gekennzeichnet, dass** der Werkstückträger (WT) wenigstens zwei Aufnahmen (A,B) für zwei Werkstücke (WS1, WS2, WS3) aufweist, und dass die Aufnahmen (A,B) entsprechend beschickt werden.

4. Werkstückbearbeitungsverfahren nach Anspruch 1, **dadurch gekennzeichnet, dass** auf dem Werkstückträger (WT) jeweils ein Werkstück (WS2) für einen ersten Durchlauf und jeweils ein Werkstück (WS3) für einen zweiten Durchlauf in jeweils unterschiedlichen Aufnahmen (A,B) vorgesehen ist.

5. Werkstückbearbeitungsverfahren nach Anspruch 1, **dadurch gekennzeichnet, dass** der Werkstückträger (WT) eine definierte Aufnahme (A) für eine Oberseitenbearbeitung und eine definierte Aufnahme (B) für eine Unterseitenbearbeitung jedes Werkstückes (WS1, WS2, WS3) aufweist.

6. Werkstückbearbeitungsverfahren nach Anspruch 1, **dadurch gekennzeichnet, dass** nach einem erstmaligen Durchlauf eines ersten Werkstückes (WS1) jeweils zwei Werkstücke (WS1 + WS2; WS2 + WS3) auf dem Werkstückträger (WT) abgelegt sind.

7. Werkstückbearbeitungsverfahren nach Anspruch 1, **dadurch gekennzeichnet, dass** unbearbeitete Werkstücke (WS2,WS3) in einem Bereitschaftsraum des Transfersystems bereitgestellt werden, und dass bereitgestellte Werkstücke (WS2,WS3) nach dem Ausschleusen von fertig bearbeiteten Werkstücken (WS1) auf dem Werkstückträger (WT) abgelegt und in das Transfersystem eingeschleust werden.

8. Transfersystem wobei ein Werkstück (WS1, WS2, WS3) zusammen mit einem Werkstückträger (WT) in einer ersten Station (1) in das Transfersystem eingeschleust, sodann in folgenden Stationen (2,3,4), die mehrere Fertigungsmodule umfassen können, bearbeitet, und wobei das Werkstück (WS1, WS2, WS3) in einer letzten Station (5) ausgeschleust wird, **dadurch gekennzeichnet, dass** eine letzte Station (5) mit einer automatisierten Handhabungsvorrichtung, insbesondere mit einem Roboter, und mit einem Rücklauf (6) für einen Rücklaufprozess, vorgesehen ist, um das Werkstück (WS1, WS2, WS3) nach einem ersten Durchlauf und zur Vorbereitung von einem oder mehreren weiteren Durchläufen von dem Werkstückträger (WT) aufzunehmen, zu drehen, und in definierter, verdrehter Lage auf dem Werkstückträger (WT) abzulegen.

9. Transfersystem nach Anspruch 8, **dadurch gekennzeichnet, dass** der Werkstückträger (WT) wenigstens zwei Aufnahmen (A,B) für zwei unterschiedliche Werkstücke (WS1, WS2, WS3) aufweist.

10. Transfersystem nach Anspruch 8, **dadurch gekennzeichnet, dass** die Aufnahmen (A,B) selbsttätig einstellbar ausgebildet sind, so dass jede der Aufnahmen (A,B) jedes der Werkstücke (WS1, WS2, WS3) aufzunehmen vermag.

11. Transfersystem nach Anspruch 10, **dadurch gekennzeichnet, dass** der Werkstückträger (WT) Spannmittel für das Werkstück (WS) aufweist, und dass die Spannmittel wenigstens eine Feder aufweisen.

## Claims

1. Workpiece machining method for a transfer system, wherein a workpiece (WS1, WS2, WS3) together with a workpiece carrier (WT) is fed in a first station (1) into the transfer system and is then machined in following stations (2, 3, 4) which may comprise a plurality of production modules, and wherein the workpiece (WS1, WS2, WS3) is discharged in a last station (5), wherein
a) a first side (E) of the workpiece (WS1, WS2, WS3) is machined in a first pass through the transfer system, that
b) the workpiece (WS1, WS2, WS3), after its first pass through the stations (2, 3, 4), is automatically turned and is deposited again on the workpiece carrier (WT), and that
c) another side (F) of the workpiece (WS1, WS2, WS3) is machined in a second pass through the transfer system, **characterized in that**
d) a workpiece (WS1, WS2) machined on one side, after a first pass through the transfer system, is conveyed back to the first station (1) before the second side (F) is machined, and **in that** a return path (6) is provided for the return conveying.

2. Workpiece machining method according to Claim 1, **characterized in that** a workpiece (WS1, WS2, WS3) makes n passes through the transfer system, where n represents the number of sides of the workpiece (WS1, WS2, WS3), and **in that** the workpiece (WS1, WS2, WS3) is turned n-1 times for this purpose.

3. Workpiece machining method according to Claim 1, **characterized in that** the workpiece carrier (WT) has at least two receptacles (A, B) for two workpieces (WS1, WS2, WS3), and **in that** the receptacles (A, B) are loaded accordingly.

4. Workpiece machining method according to Claim 1, **characterized in that** a respective workpiece (WS2) for a first pass and a respective workpiece (WS3) for a second pass are provided in respectively different receptacles (A, B) on the workpiece carrier (WT).

5. Workpiece machining method according to Claim 1, **characterized in that** the workpiece carrier (WT) has a defined receptacle (A) for machining the top side and a defined receptacle (B) for machining the underside of each workpiece (WS1, WS2, WS3).

6. Workpiece machining method according to Claim 1, **characterized in that**, after a first pass of a first workpiece (WS1), in each case two workpieces (WS1 + WS2; WS2 + WS3) are deposited on the workpiece carrier (WT).

7. Workpiece machining method according to Claim 1, **characterized in that** unmachined workpieces (WS2, WS3) are made available in a stand-by space of the transfer system, and **in that** workpieces (WS2, WS3) made available, after the discharge of finish-machined workpieces (WS1), are deposited on the workpiece carrier (WT) and are fed into the transfer system.

8. Transfer system, wherein a workpiece (WS1, WS2, WS3) together with a workpiece carrier (WT) is fed in a first station (1) into the transfer system and is then machined in following stations (2, 3, 4) which may comprise a plurality of production modules, and wherein the workpiece (WS1, WS2, WS3) is discharged in a last station (5), **characterized in that** a last station (5) is provided with an automated manipulating device, in particular with a robot, and with a return path (6) for a return process, in order to accommodate the workpiece (WS1, WS2, WS3) from the workpiece carrier (WT), after a first pass and in preparation for one or more further passes, and in order to turn said workpiece (WS1, WS2, WS3) and deposit it in a defined, turned position on the workpiece carrier (WT).

9. Transfer system according to Claim 8, **characterized in that** the workpiece carrier (WT) has at least two receptacles (A, B) for two different workpieces (WS1, WS2, WS3).

10. Transfer system according to Claim 8, **characterized in that** the receptacles (A, B) are designed to be automatically adjustable, such that each of the receptacles (A, B) is able to accommodate each of the workpieces (WS1, WS2, WS3).

11. Transfer system according to Claim 10, **characterized in that** the workpiece carrier (WT) has clamping means for the workpiece (WS), and **in that** the clamping means have at least one spring.

## Revendications

1. Procédé d'usinage de pièces pour un système de transfert, dans lequel une pièce (WS1, WS2, WS3) est introduite avec un porte-pièces (WT) dans une première station (1) dans le système de transfert, puis usinée dans des stations suivantes (2, 3, 4) qui peuvent comporter plusieurs modules de fabrication, et dans lequel la pièce (WS1, WS2, WS3) est extraite dans une dernière station (5), dans lequel
a) on usine un premier côté (E) de la pièce (WS1, WS2, WS3) au cours d'un premier passage à travers le système de transfert,
b) on retourne automatiquement la pièce (WS1, WS2, WS3) après son premier passage à travers les stations (2, 3, 4) et on la dépose de nouveau sur le porte-pièces (WT), et
c) on usine un autre côté (F) de la pièce (WS1, WS2, WS3) au cours d'un deuxième passage à travers le système de transfert,
**caractérisé en ce que**
d) on renvoie une pièce (WS1, WS2) usinée sur un côté au cours d'un premier passage à travers le système de transfert à la première station (1), avant d'usiner le deuxième côté (F), et **en ce qu'**il est prévu un parcours de retour (6) pour le renvoi de la pièce.

2. Procédé d'usinage de pièces selon la revendication 1, **caractérisé en ce qu'**une pièce (WS1, WS2, WS3) effectue n passages à travers le système de transfert, n représentant le nombre de côtés de la pièce (WS1, WS2, WS3), et **en ce que** la pièce (WS1, WS2, WS3) est à cet effet retournée n-1 fois.

3. Procédé d'usinage de pièces selon la revendication 1, **caractérisé en ce que** le porte-pièces (WT) présente au moins deux logements (A, B) pour deux pièces (WS1, WS2, WS3), et **en ce que** les logements (A, B) sont équipés de manière correspondante.

4. Procédé d'usinage de pièces selon la revendication 1, **caractérisé en ce qu'**il est prévu sur le porte-pièces (WT) chaque fois une pièce (WS2) pour un premier passage et chaque fois une pièce (WS3) pour un deuxième passage dans des logements (A, B) chaque fois différents.

5. Procédé d'usinage de pièces selon la revendication 1, **caractérisé en ce que** le porte-pièces (WT) présente un logement défini (A) pour un usinage d'un côté supérieur et un logement défini (B) pour un usinage d'un côté inférieur de chaque pièce (WS1, WS2, WS3).

6. Procédé d'usinage de pièces selon la revendication 1, **caractérisé en ce qu'**après un premier passage d'une première pièce (WS1), deux pièces (WS1 + WS2; WS2 + WS3) sont chaque fois déposées sur le porte-pièces (WT).

7. Procédé d'usinage de pièces selon la revendication 1, **caractérisé en ce que** les pièces non usinées (WS2, WS3) sont préparées dans une chambre préparatoire du système de transfert, et **en ce que** des pièces préparées (WS2, WS3) sont déposées sur le porte-pièces (WT) après l'extraction de pièces usinées terminées (WS1) et introduites dans le système de transfert.

8. Système de transfert dans lequel une pièce (WS1, WS2, WS3) est introduite avec un porte-pièces (WT) dans une première station (1) dans le système de transfert, puis usinée dans des stations suivantes (2, 3, 4) qui peuvent comporter plusieurs modules de fabrication, et dans lequel la pièce (WS1, WS2, WS3) est extraite dans une dernière station (5), **caractérisé en ce qu'**il est prévu une dernière station (5) avec un dispositif de manipulation automatisé, en particulier avec un robot, et avec un parcours de retour (6) pour une opération de renvoi, afin de reprendre la pièce (WS1, WS2, WS3) du porte-pièces (WT), de la tourner et de la déposer dans une position tournée définie sur le porte-pièces (WT) après un premier passage et pour préparer un ou plusieurs autres passages.

9. Système de transfert selon la revendication 8, **caractérisé en ce que** le porte-pièces (WT) présente au moins deux logements (A, B) pour deux pièces différentes (WS1, WS2, WS3).

10. Système de transfert selon la revendication 8, **caractérisé en ce que** les logements (A, B) sont réglables automatiquement, de telle manière que chacun des logements (A, B) puisse recevoir chacune des pièces (WS1, WS2, WS3).

11. Système de transfert selon la revendication 10, **caractérisé en ce que** le porte-pièces (WT) comporte des moyens de serrage pour la pièce (WS), et **en ce que** les moyens de serrage présentent au moins un ressort.
